# EUROPEAN PATENT APPLICATION

(11) **EP 3 629 618 A1**
(43) Date of publication of application: **01.04.2020**
(21) Application number: 18000776.7
(22) Date of filing: 28.09.2018
(51) Int. Cl.: H04W 28/02

(54) **HIGH-VOLUME LOW-IMPACT QUALITY OF SERVICE MANAGEMENT FOR INTERNET OF THINGS**

(71) Applicant: Giesecke+Devrient Mobile Security GmbH, 81677 München (DE)
(72) Inventor: Tea, Vui Huang, 12061 Stockholm (SE)

(57) **Abstract**

The present invention is directed towards a method for improving Quality of Service management in a network especially arranged for the so-called internet of things. Despite a huge number of communicating end devices, the present invention enables the underlying network system to perform Quality of Service management involving only little technical effort. The present invention is furthermore directed towards a respectively arranged system arrangement for improving Quality of Service management as well as towards a computer program product comprising instructions implementing the suggested method.

## Description

The present invention is directed towards a method for improving Quality of Service management in a network especially arranged for the so-called internet of things. Despite a huge number of communicating end devices, the present invention enables the underlying network system to perform Quality of Service management involving only little technical effort. The present invention is furthermore directed towards a respectively arranged system arrangement for improving Quality of Service management as well as towards a computer program product comprising instructions implementing the suggested method.

US 2013/0 326 631 A1 teaches a method of reporting information associated with a device comprising intercepting a communication associated with the device, routing the communication such that the communication bypasses a core network and reporting information associated with the communication to a core network entity.

US 2013/0 042 011 A1 teaches a connection establishment method among communication nodes, wherein a first and a second connection is established and afterwards one of these connections is selected.

US 2012/0 324100 A1 teaches obtaining performance metrics associated with a plurality of access nodes. According to this publication, adapting one or more rules of one or more policies for matching internet protocol traffic is accomplished.
It is commonly known in the art to provide a network of end devices known as the so-called internet of things. According to this usage scenario, everyday end devices are connected and communicate with each other. Due to the fact that a variety of end devices takes part in such a communication scenario, large amounts of traffic occur and the communication infrastructure needs to provide respective services. One specific application domain is the smart home, where, for instance, a heating system and a refrigerator are connected to a server unit, which can be controlled from a car. This example demonstrates that an increasing amount of end devices needs to be connectively coupled and the underlying hardware infrastructure needs to handle the communication as such, and especially has to provide real-time services.

A further technical field, which is known in the art is quality management of communication infrastructures. According to this aspect, certain specifications regarding bandwidths and response times, amongst others, have to be met. However, commonly known methods deal with only a limited number of end devices, not taking into account that in future application scenarios the amount of involved end devices will drastically increase. Mobile telecommunication infrastructures are of special relevance as such end devices typically communicate over a wireless interface.

In general, there is a need for improved Quality of Service management taking into account the increasing number of end devices, especially so-called internet of things end devices. Quality management involves the availability of bandwidths, response times and availability of services. The person skilled in the art recognizes that additional aspects need to be handled in the context of Quality of Service management.

Consequently, it is an object of the present invention to provide an improved method for enabling Quality of Service management for internet of things end devices, which can be implemented with little technical effort. Moreover, it is an object of the present invention to provide a respective system arrangement for improving Quality of Service management being able to handle a huge amount of end devices. Furthermore, it is an object of the present invention to provide a respective computer program product with control instructions performing the suggested method steps and able to operate the suggested system arrangement.

The object is solved by means according to independent claims. Further advantages and technical effects are provided by dependent claims.

Accordingly, a method for improving Quality of Service management for internet of things end devices is suggested, comprising the following steps. The steps involve sending Quality of Service mobile originated data from a User Equipment to a Serving Gateway Node, characterized by the steps of providing a Network Probe Entity and a Quality of Service Gateway Entity and redirecting said data to a network via the Network Probe Entity and the Quality of Service Gateway, wherein the Network Probe Entity and the Quality of Service Gateway jointly perform Quality of Service management.

The present invention is settled in the application domain of the so-called Internet of Things, IoT, and especially in the field of quality management regarding data communication with IoT end devices. It is one feature of the Internet of Things that end devices are present in huge numbers and consequently existing technology managing communication quality is not scalable enough, so that these huge amounts of end devices with respective data communication cannot be handled. Consequently, there is the problem that respective services have to be reduced in frequency and scope of measurements. Hence, such huge amounts of end devices imply reduced quality management as underlying hardware components are not powerful enough to offer full quality management to each and every device available.

The inventor provides the solution that existing network topology is adapted and consequently the communication flow of quality of service management data is amended. The inventor suggests a so-called Network Probe and furthermore a QoS gateway. Such components bypass further components such that these bypassed components do not need to handle such huge amounts of data. The Network Probe is a passive device which receives network traffic from further components and can analyze and process the network business and signaling in real-time. The QoS gateway consolidates and compresses groups of QoS measurement reports and transmits such measurement reports over the network.

This provides the advantage that the overall number of connections is reduced and, moreover, the data size to be transmitted is also significantly reduced. As a result, huge numbers of end devices can be handled regarding quality management, the number of connections is decreased as well as the data size to be transmitted.

In the context of the present invention, abbreviations shall be used in accordance with respective 3GPP specifications if not indicated otherwise. For instance, SRB stands for Signaling Radio Bearer, NAS stands for Non-Access Stratum, MME stands for Mobility Management Entity, SGW stands for Serving Gateway, PGW stands for PDN Gateway, PDN stands for Packet Data Network, RRC stands for Root Raised Cusine, ESM stands for EPS Session Management, eNodeB stands for evolved Node B, NB stands for Narrow Band and CSGN stands for CIoT Serving Gateway Node. Moreover, uplink specifies the direction from the User Equipment toward the network infrastructure and downlink refers to the direction toward the User Equipment. A User Equipment is abbreviated by UE and may, for instance, be present in the form of a smartphone or any cellular mobile phone, cell phone for short.

Regarding further definitions and terminology, the skilled person would refer to 3GPP specifications, especially TR 21.905 being available in several versions and downloadable from 3GPP servers. This specification introduces major vocabulary, and the underlying invention is to be understood in the context of the provided terminology. Moreover, the present invention relies on existing network topologies and infrastructures and consequently, the introduced concepts refer to such specifications being likewise provided by 3GPP.

The suggested method refers to the improvement of Quality of Service management which implies that existing infrastructures are developed further. Especially, the suggested method refers to commonly known telecommunication infrastructures which are adapted such that Quality of Service is outsourced to external units, namely the Network Probe Entity and the so-called Quality of Service Gateway. In this way, communication flow is redirected and handled by additional entities not being implemented in currently known telecommunication infrastructures. The service management refers to the handling of communication sessions with a huge amount of end devices. These end devices are provided in the context of the internet of things and require improved Quality of Service techniques as they drastically increase in number and need to be handled at real-time. An internet of things end device can be any device whatsoever comprising a communication interface along with processing means.

The User Equipment sends Quality of Service mobile-originated QoS MO data to a Serving Gateway Node SGN, which is typically performed using an eNodeB. The eNodeB, typically abbreviated using eNB, provides access to the end device and connects the User Equipment with the network. The Serving Gateway Node may comprise further components such as the Mobile Management MME and the Serving Gateway SGW. However, according to the present invention, typically only the MME is used and the SGW drops packets referring to the Quality of Service management.

Novel entities are provided toward existing infrastructures, namely a Network Probe Entity and a Quality of Service Gateway Entity. Both entities may be provided by respective hardware or software components. Consequently, they may be established on existing servers or be provided in the form of additional hardware components.

Moreover, redirecting said data to a network via the Network Probe Entity and the Quality of Service Gateway is performed. This may be accomplished using the Network Probe Entity, which is connectively coupled with a respective interface, especially the S11-U interface. This allows the underlying method to redirect communication packets which are received by MME and are forwarded to the Network Probe Entity. The Network Probe Entity as such is connectively coupled with the Quality of Service Gateway. The Quality of Service Gateway again is coupled to further network components providing a communication interface to the internet.

The Network Probe Entity and the Quality of Service Gateway perform Quality of Service management, which involves data analysis, improving response times, measuring bandwidths and improvement thereof and further typical Quality of Service tasks. One contribution of the present invention is that not only the Quality of Service Gateway and the Network Probe Entity as such perform quality management but rather the communication flow is redirected and is especially directed away from the core components of the underlying network structure. In this way the respective components are bypassed and said data is provided to the network, for instance the internet, without using such components. In this way technical effort is reduced and the redirection of the communication flow leads to improved hardware resource management and consequently to an improvement regarding the communication quality.

According to an aspect of the present invention, the Serving Gateway Node is a Cellular Internet of Things Serving Gateway Node. This provides the advantage that this technology provides improved possibilities for Quality of Service management. For instance, respective interfaces are open for additional data communication allowing the underlying method to redirect data. Moreover, such technology is specifically tailored to the so-called internet of things and provides advanced communication features especially to Cellular internet of things end devices.

According to a further aspect of the present invention, the Network Probe Entity tracks devices with phone number, international mobile subscriber identity and/or internet protocol number. This provides the advantage that Quality of Service management can be provided under consideration of each of the end devices, namely the User Equipment. This leads to increased possibilities regarding Quality of Service management. The phone number is typically provided in the form of the MSISDN. An internet protocol number typically comprises an internet protocol address, which can be used synonymously.

According to a further aspect of the present invention, the Network Probe Entity comprises a Probe Packet Processing Module performing decoding processing, IP fragments reassembling, tunnel processing and/or data distributing. This provides the advantage that performing Quality of Service management can be divided into the Network Probe Entity, which handles data communication as such, and furthermore the Quality of Service Gateway, which handles sophisticated Quality of Service tasks.

According to a further aspect of the present invention, redirecting said data is accomplished using a S11-U interface. This provides the advantage that commonly known techniques can be reused and the existing network infrastructure does not need to be amended, but is rather enhanced according to the suggested method. The S11-U interface can be used for the identification of data packets referring to Quality of Service management and consequently, such packets can be redirected.

According to a further aspect of the present invention, the Network Probe Entity listens on the S11-U interface. This provides the advantage that the communication flow as originally implemented is not changed but rather respective packets are delivered to the Network Probe Entity allowing the Quality of Service Gateway to manage such packets. In this way, the existing interface merely needs to be enhanced.

According to a further aspect of the present invention, a Serving Gateway SGW discards said data. This provides the advantage that the Quality of Service management data packets are still distributed via the underlying interface and the hardware infrastructure does not need to be changed but rather is enhanced. As the Serving Gateway no longer handles such data packets, they can be discarded or simply dropped. In this way, the communication packets are not delivered to the core network but rather are handled by the newly introduced components.

According to a further effect of the present invention, the Network Probe Entity extracts metadata from said data. This provides the advantage that the data packets can be analyzed and further data communication can be performed considering the provided metadata.

According to a further aspect of the present invention, the Network Probe Entity analyzes and processes said data. This provides the advantage that processing steps can be outsourced and can be performed by a specialized unit which enhances the commonly known network infrastructure. Hence, the Network Probe Entity may analyse Quality of Service measurements and decide which steps are performed in the further procedure.

According to a further aspect of the present invention, the Quality of Service Gateway compresses said data. This provides the advantage that the traffic over the network is reduced and the bandwidth can be fully used for respective data. Consequently, an additional enhancement towards communication flow and consequently response times is provided.

According to a further aspect of the present invention, the Quality of Service Gateway communicates with a further server provided by the Mobile Network Operator. This provides the advantage that the Mobile Network Operator can perform additional tasks and can not only perform further analyzation steps but rather is enabled to adapt the network such that the received parameters are improved. This allows the Mobile Network Operator to react on specific Quality of Service measurements and consequently make sure that the overall Quality of Service is appropriate.

According to a further aspect of the present invention, said network is an internet and/or a network providing Cellular Internet of Things Services. This provides the advantage that the same communication flow as commonly known in the art is performed but a more efficient communication path is used towards the receiver of underlying data. Finally, respective services can be provided using the internet and no disadvantages regarding quality are to be expected despite the huge number of end devices.

According to a further aspect of the present invention, the method is implemented as a network protocol. This provides the advantage that the suggested method steps are performed by actors and communication flow is accomplished using such a network protocol. Furthermore, there is the advantage that the suggested method can be performed with low technical effort as merely the network protocol has to be introduced and the Network Probe Entity and the Quality of Service Gateway Entity need to be operated.

The object is also solved by a system arrangement for improving Quality of Service management for internet of things end devices, comprising an interface being arranged to send Quality of Service mobile originated data from a User Equipment to a Serving Gateway Node, characterized by: at least one network component being arranged to provide a Network Probe Entity and a Quality of Service Gateway Entity and a redirection entity being arranged to redirect said data to a network via the Network Probe Entity and the Quality of Service Gateway, wherein the Network Probe Entity and the Quality of Service Gateway jointly perform Quality of Service management.

The person skilled in the art recognized that the introduced interfaces may be provided by one single interface or separate interfaces being established using network components. Likewise, the Network Probe Entity and the Quality of Service Gateway Entity may be provided by a single hardware component or separate components. Moreover, they can be established using hardware and/or software components.

The object is also solved by a computer program product comprising instructions for performing the suggested method steps and operating the suggested system arrangement.

According to the present invention, it is of advantage that the method suggests method steps which can likewise be provided by functionality of the structural features of the system arrangement. In a similar faction, the system arrangement provides structural features which provide functionality being arranged to perform the suggested method steps. Consequently, the method is able to operate the suggested system arrangement and the system arrangement is able to perform the method steps.

Further advantages of the present invention are demonstrated with reference to the accompanying figures, which show:
- Fig. 1:: a communication layer arrangement as an application scenario of the suggested method according to an aspect of the present invention;
- Fig. 2:: a NAS control plane service request procedure model according to an application scenario of the present invention;
- Fig. 3:: the flow of Quality of Service data according to the state of the art;
- Fig. 4:: the communication flow as currently suggested by the method for improving Quality of Service management according to an aspect of the present invention;
- Fig. 5:: a further communication flow according to the method for improving Quality of Service management as currently suggested; and
- Fig. 6:: a schematic flowchart depicting the method for improving Quality of Service management according to a further aspect of the present invention.

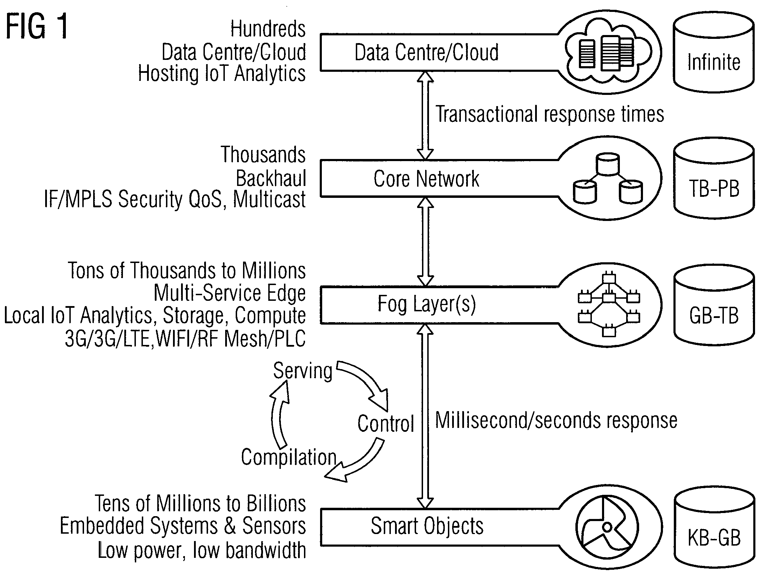

Fig. 1 shows a communication layer model which is used by the suggested method for improving Quality of Service management.

The Internet of Things (IoT) is a computing concept where everyday objects have internet connectivity and they can collect and exchange data. The IoT network comprises of a wide variety of physical devices, vehicles, buildings, and any other devices or objects used in our daily lives. IoT is expected to bring a revolution of tremendous growth opportunities by bringing millions of new sets of devices into the network. Narrow-Band IoT (NB-IoT) is a narrowband radio technology that is optimized for IoT in 3GPP Release 13. Optimizations on the core network are applicable to both NB-IoT RAT and EUTRAN RAT (for eMTC/LTE-M devices).

A system of Quality of Service (QoS) has many benefits to the MNO as it enables the MNO to monitor and ensure a fully functioning and reliable network with good coverage. Due to exponential increase in number of IoT devices versus human users, traditional QoS collection mechanism is neither feasible, scalable nor economically viable. The compromise is to reduce the frequency and scope of QoS measurements collected, however, this concession can greatly distort the overall view of the IoT network, leading to incorrect and misleading analysis, and subsequently costly erroneous decisions being made and acted on.

The invention is to enable high-volume and frequent reporting and collecting of QoS measurements to enable highly accurate and up-to-date representation of the actual state of the IoT network. This is achieved by consolidating and compressing QoS mobile originated (MO) data at the fog layer before sending it to the QoS system at the cloud layer. By doing so, it by-passes core network systems, alleviating it from a virtual denial-of-service attack from the constant and incessant onslaught of torrents of QoS reports by millions of individual IoT devices. Consequently, the MNO avoids the need to unnecessarily spend a lot of money to upgrade the core network to handle the heavy load of non-customer and non-chargeable QoS traffic. The consolidation of numerous small QoS streams into fewer streams also serves to reduce the strain on the MNO' s internet pipeline. This improves the internet traffic flow for the MNO's customer by reducing unnecessary data traffic congestion, delays and interruptions.

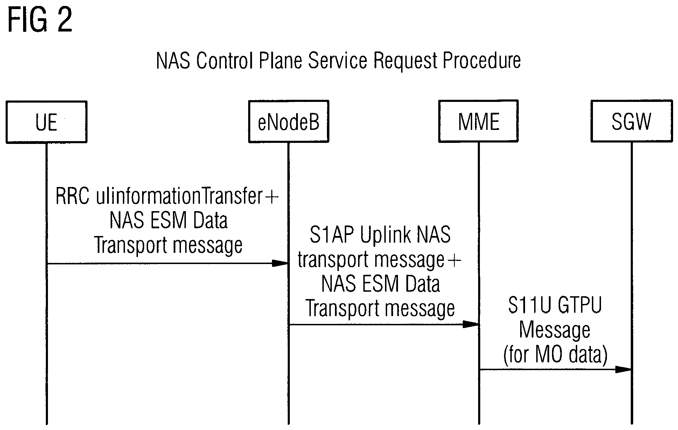

Fig. 2 on the right shows a message protocol and especially shows that the information is passed from the MME to the SGW. In between those components the used interface S11-U is used.

Without the invention, mobile originated (MO) data like the QoS data and mobile terminated (MT) data exchange utilizes the SRB to carry data over NAS. The uplink QoS MO data in NAS message is transferred from the IoT User Equipment (UE) to eNodeB to MME and further to the SGW and then to the PGW. The IP packets are then forwarded to the AS/Internet via the SGi interface. This puts a heavy load on numerous network components and their connection links.

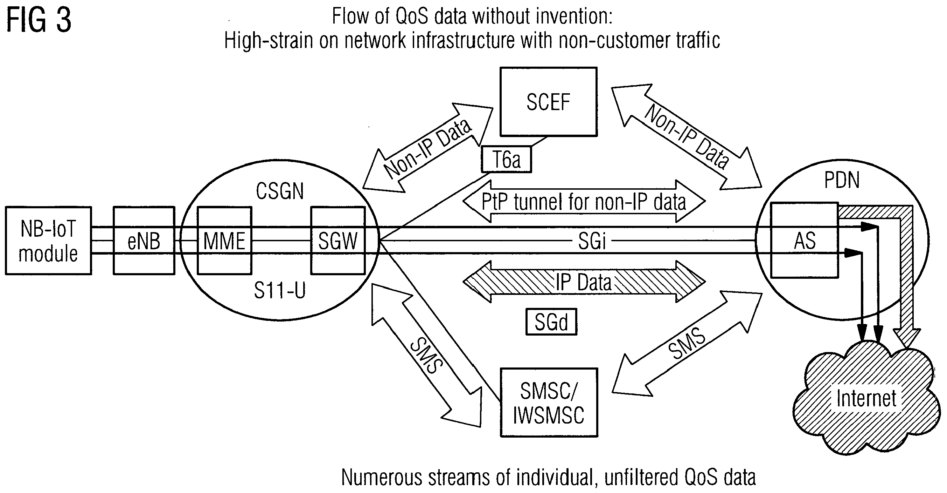

Fig. 3 shows the communication flow of Quality of Service management data according to the prior art, wherein the respective packets are sent from the end device to the internet using the core network. This is of disadvantage as the packets need to be processed and transmitted by each and every component within the core network. This disadvantage is overcome according to the provided technical teaching.

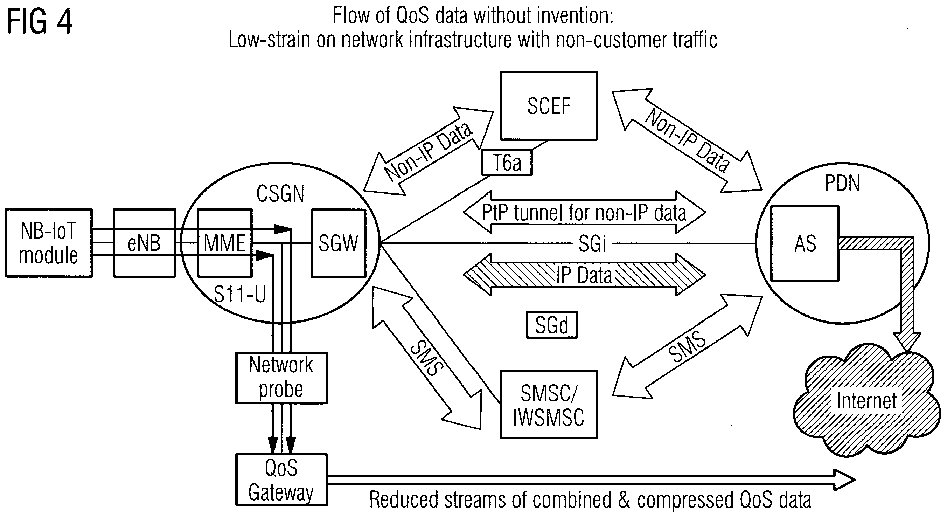

Fig. 4 shows the adapted infrastructure according to Fig. 3 and especially introduces the so-called Network Probe Entity and the Quality of Service Gateway which are used for performing Quality of Service management. As can be seen in the bottom of Fig. 4, information is passed from the Quality of Service Gateway to the internet. The core network in the middle of Fig. 4 is bypassed and accordingly, hardware resources are saved.

With the invention, the uplink QoS MO data in NAS message is transferred from the IoT User Equipment (UE) to eNodeB to MME and dropped. This removes the heavy load from numerous network components and their connection links. Huge volumes of QoS measurement reports sent uplink by millions of IoT devices is consolidated and compressed at the fog layer by a QoS gateway, hence alleviating the heavy traffic load and overheads on the MNO's core network system.

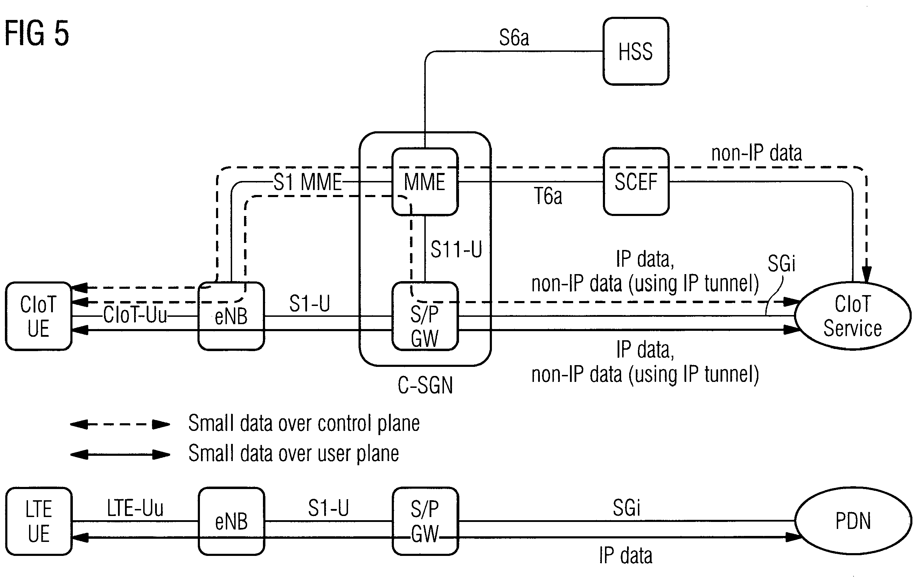

Fig. 5 shows a communication path according to the present invention. The User Equipment, namely the end device, is depicted on the left, and, on the right, the internet or respectively service provider is depicted.

Unlike conventional Evolved Packet System (EPS) architectures so far, 3GPP Release 13 supports Cellular Internet of Things (CIoT) EPS optimization (Control/User plane) allowing the network to deliver small data not only in user plane, but also in control plane. This was possible because the new architecture features two new entities, CIoT Serving Gateway Node (C-SGN) and Service Capability Exposure Function (SCEF), and an interface, S11-U, defined for data transmission between Mobility Management Entity (MME) and S-GW. The difference between the CIoT EPS Optimization is:
- Control Plane CIoT EPS Optimization (mandatory) targets transmission of short and infrequent data transmission using Non-Access Stratum (NAS) Signaling Radio Bearer (SRB), avoiding establishment of Data Radio Bearer (DRB) over the radio link to save battery life. The NB-IoT data delivered to MME as NAS PDU may be routed bi-directionally via SCEF (non-IP Data Only) or via SGW/PGW (IP/non-IP Data) to the IoT platform. Only non-IP data can be delivered through SCEF. When non-IP data are delivered through S/P-GW, IP encapsulation is performed first.
- User Plane CIoT EPS Optimization (optional) delivers NB-IoT data on userplane like LTE data. Lower signaling is generated when switching to 'Connected' state because UE context is stored in both device and base station even in 'Idle' state. Compared to delivery on the control plane, higher signaling overhead can be generated, but data are delivered in order. It requires the setup of Data Radio Bearer (DRB), which are then used to transport IP/non-IP data via SGW/PGW to the IoT platform. This mechanism is more suitable for connection oriented sessions where sequence of messages need to be exchanged between the server and end-device. Additionally, User Plane CIoT Optimization also allows caching in idle mode to support suspend/resume procedures on RadioIS1 interface.

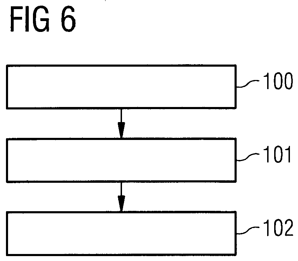

Fig. 6 shows a flowchart of the method for improving Quality of Service management for internet of things end devices comprising the steps of sending 100 Quality of Service mobile originated data from a User Equipment to a Serving Gateway Node, characterized by the steps of providing 101 a Network Probe Entity and a Quality of Service Gateway Entity and redirecting 102 said data to a network via the Network Probe Entity and the Quality of Service Gateway Entity, wherein the Network Probe Entity and the Quality of Service Gateway jointly perform Quality of Service management.

The person skilled in the art recognized that the aforementioned method steps may comprise additional substeps and/or may be performed iteratively or in a different order. For instance, the Network Probe Entity can be provided after the Quality of Service Gateway Entity. Moreover, sending 100 Quality of Service mobile originated data from a User Equipment is performed iteratively and is likewise redirected accordingly.

## Claims

1. A method for improving Quality of Service management for internet of things end devices, comprising the steps:
- sending (100) Quality of Service mobile originated data from a User Equipment to a Serving Gateway Node, **characterized by** the steps of:
- providing (101) a Network Probe Entity and a Quality of Service Gateway Entity; and
- redirecting (102) said data to a network via the Network Probe Entity and the Quality of Service Gateway Entity, wherein the Network Probe Entity and the Quality of Service Gateway Entity jointly perform Quality of Service management.

2. The method according to claim 1, **characterized in that** the Serving Gateway Node is a Cellular Internet of Things Serving Gateway Node.

3. The method according to claim 1 or 2, **characterized in that** the Network Probe Entity tracks devices with phone number, International Mobile Subscriber Identity and/or Internet Protocol number.

4. The method according to any one of the preceding claims, **characterized in that** the Network Probe Entity comprises a Probe Packet Processing Module performing decoding processing, IP fragments reassembling, tunnel processing and/or data distributing.

5. The method according to any one of the preceding claims, **characterized in that** redirecting (102) said data is accomplished using a S11-U interface.

6. The method according to claim 5, **characterized in that** the Network Probe Entity listens on the S11-U interface.

7. The method according to any one of the preceding claims, **characterized in that** a Serving Gateway (SGW) discards said data.

8. The method according to any one of the preceding claims, **characterized in that** the Network Probe Entity extracts meta data from said data.

9. The method according to any one of the preceding claims, **characterized in that** the Network Probe Entity analyses and processes said data.

10. The method according to any one of the preceding claims, **characterized in that** the Quality of Service Gateway Entity compresses said data.

11. The method according to any one of the preceding claims, **characterized in that** the Quality of Service Gateway Entity communicates with a further server provided by the Mobile Network Operator.

12. The method according to any one of the preceding claims, **characterized in that** said network is an internet and/or a network providing Cellular Internet of Things Services.

13. The method according to any one of the preceding claims, **characterized in that** the method is implemented as a network protocol.

14. A system arrangement for improving Quality of Service management for internet of things end devices, comprising:
- an interface being arranged to send (100) Quality of Service mobile originated data from a User Equipment to a Serving Gateway Node, **characterized by**:
- at least one network component being arranged to provide (101) a Network Probe Entity and a Quality of Service Gateway Entity; and
- a redirection entity being arranged to redirect (102) said data to a network via the Network Probe Entity and the Quality of Service Gateway Entity, wherein the Network Probe Entity and the Quality of Service Gateway Entity jointly perform Quality of Service management.

15. A computer program product being arranged to perform a method in accordance with any one of the preceding claims 1 to 13, when being executed on a computer.
